# EUROPEAN PATENT APPLICATION

(11) **EP 4 604 370 A1**
(43) Date of publication of application: **20.08.2025**
(21) Application number: 24158120.6
(22) Date of filing: 16.02.2024
(51) Int. Cl.: H02K 7/18, H02K 7/06, B29D 30/00

(54) **METHOD FOR CONVERTING ROTATIONS AND VIBRATIONS OF A VEHICLE S WHEEL TO ELECTRICITY**

(71) Applicant: Enervibe Ltd., 7019900 Airport City (IL)
(72) Inventor: Haronian, Michael, 9987500 8/4 Mevo Haruv Street, Tzur Hadasa (IL)
(74) Representative: Lapienis, Juozas

(57) **Abstract**

A method for converting vibrations and rotations of vehicle's wheel while traveling to electricity. The method includes the step of providing an electromagnetic energy harvester that includes a frame fixed on the tire of the wheel, a coil that is fixed to the frame, a rotary magnetic generator axially connected to the frame distal from its center of gravity, a stationary magnet fixed to the frame, the step of rotating the rotary magnetic generator about the axial connection to an equilibrium rotation angle by driving the vehicle when the harvester crosses the contact patch of the tire with the ground, and the step of rotating the rotary magnetic generator out from the equilibrium rotation angle by driving the vehicle when the harvester rolls outside the contact patch. These cyclical rotations create alternating voltage between two ends of the coil.

## Description

### TECHNICAL FIELD

The present disclosure is related to a method for converting rotations and vibrations of a vehicle's wheel to electricity by employing an electromagnetic energy harvester.

### PRIOR ART

The vehicle market is thirsty for new developments that include sensors and electronics that can be planted inside the vehicle tires. Such electronic components require electrical power, and the present invention describes a unique method for generating energy from the rotations and vibrations of the vehicle's wheels while the vehicle is traveling.

### BRIEF DESCRIPTION OF THE FIGURES

FIG. 1 is a schematic depiction of the harvester (10) as installed in the wheel and its position when the harvester crosses the contact patch.
FIG. 2 is a schematic depiction of the harvester (10) and the positions of the magnets in case as depicted in figure 1.
FIG. 3 is a schematic depiction of the harvester (10) as installed in the wheel and its position when the harvester rolling outside the contact patch.
FIG. 4 is a schematic depiction of the harvester (10) and the positions of the magnets in case as depicted in figure 3.

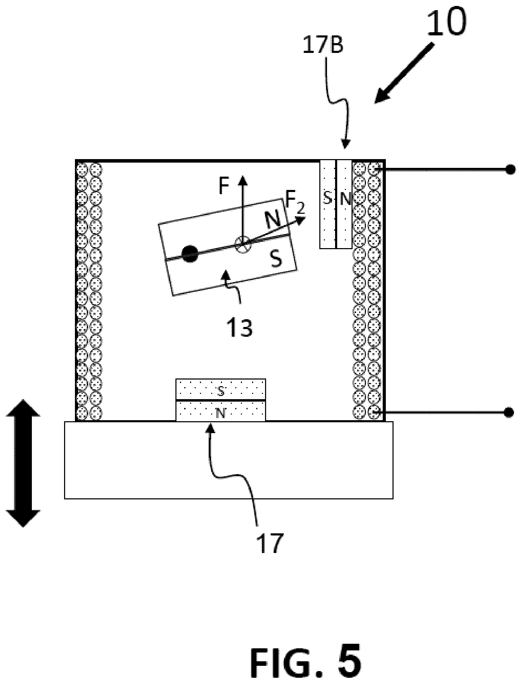

FIG. 5 is a schematic depiction of the harvester (10) with the additional stationary magnet (17B).

### THE INVENTION

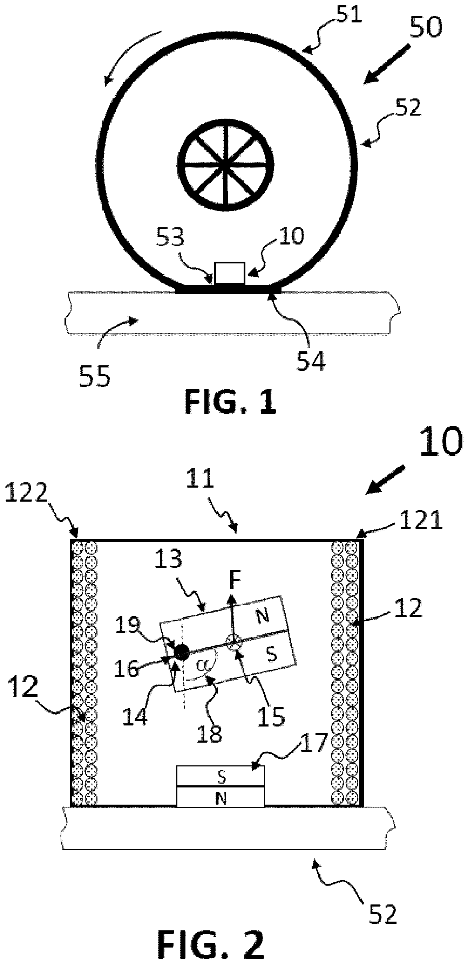

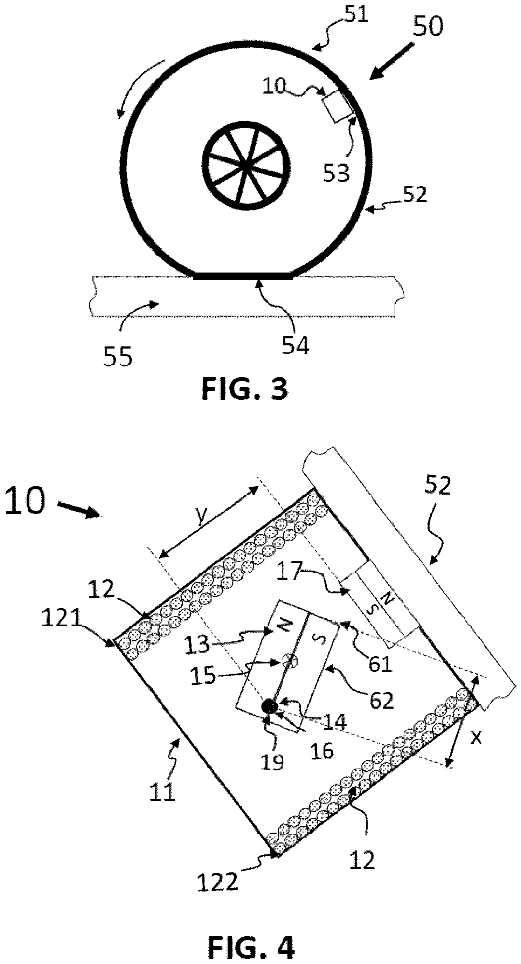

The present invention refers to a method for converting rotations of a wheel (50) of a vehicle (51) while traveling to electricity. The method includes the following steps and components:
(A) Provide an electromagnetic energy harvester (10) that includes:
   (1) a frame (11) that is designed to be fixed on the tire (52) that is mounted or designed to be mounted on the wheel (50) of the vehicle (51) (the vehicle is not shown in full in the drawings and we point referral number 51 that symbolizes the vehicle in Figures 1 and 3 by pointing the wheel that is a part of the vehicle).
   (2) a coil (12) with two ends (121) (122) that is fixed to the frame (11).
   (3) a rotary magnetic generator (13) that is axially connected to the frame (11), at a connecting point (14) that is distal from the center of gravity (15) of the rotary magnetic generator (13). In this way, the rotary magnetic generator (13) is able to rotate about the axis of rotation (16) in relation to the frame (11).
   (4) a stationary magnet (17) that is fixed to the frame (11) in a way that the stationary magnet (17) is fixed in relation to the axis of rotation (16).

The axial connection of the rotary magnetic generator (13) to the frame and the fixation of the stationary magnet (17) in relation to the axis of rotation (16) of the rotary magnetic generator are designed to enable the magnetic force (F) between these magnets (13) (17) to rotate the rotary magnetic generator (3) about that axial connection to an equilibrium rotation angle (18) relative to a line perpendicular to a specific area (53) with the electromagnetic energy harvester (10) when the specific area (53) crosses the contact patch (54) of the tire with the ground (55) during the traveling.

The axial connection of the rotary magnetic generator to the frame is designed to enable a centrifugal force generated by the rotation of the wheel (50) to exert a force on the rotary magnetic generator (13) and to rotate it out from that equilibrium rotation angle (18) when the specific area (53) rolls outside the contact patch (54) of the wheel with the ground.

(B) Rotate the rotary magnetic generator (13) about that axial connection to the equilibrium rotation angle (18) by driving the vehicle when the specific area (53) with the electromagnetic energy harvester (10) crosses the contact patch (54) of the tire with the ground (55).

(C) Rotate the rotary magnetic generator (13) out from the equilibrium rotation angle (18) by driving the vehicle when the specific area (53) rolls outside the contact patch (54).

(D) The cyclical rotations of the rotary magnetic generator (3) are designed to create alternating voltage between the two ends (21) (122) of the coil (12).

The electromagnetic kinetic energy harvester converts rotations, vibration and movements of the wheel into rotation of the rotary magnetic generator relative to a coil and it can be fixed to the tire or to a frame or a casing that is fixed to the tire. The rotary magnetic generator may be a simple magnet. This magnet may be a symmetrical or a non-symmetrical magnet fixed to the frame (that is fixed to the tire) by a hinge such that the center of gravity is off the center of the hinge such that rotations or movements of the wheel cause the rotary magnetic generator to rotate around the hinge (axis of rotations) and relative to the coil. The present invention uses a stationary magnet that replaces the need of a spring that is used in prior art.

Figure 1 is a schematic depiction of the harvester (10) as installed in the wheel and its position when the harvester crosses the contact patch, and Figure 2 is a schematic depiction of the harvester (10) and the positions of the magnets in case as depicted in figure 1. Figure 3 is a schematic depiction of the harvester (10) as installed in the wheel and its position when the harvester rolls outside the contact patch, and Figure 4 is a schematic depiction of the harvester (10) and the positions of the magnets in case as depicted in figure 3.

In more details, the present invention refers to a method for converting rotations, vibrations and motions of a wheel of a vehicle while travelling that employs the electromagnetic energy harvester (10) for converting this kinetic excitations such as impacts, vibrations or movements in general, of the wheel to electricity. The harvester (10) includes the coil (12) with two ends (121) (122), the rotary magnetic generator (13), and the stationary magnet (17) that is fixed to the frame (11) that is fixed to the tire (52) that is mounted on the wheel. The rotary magnetic generator may be a magnet in a whole, or a unit that only part of which is made of magnetic material, and the axial connection of the rotary magnetic generator to the body may be done by a variety of connecting means (19), such as a pin, axis, hinge, bearing, and the like.

The rotary magnetic generator may be a magnet in a whole, or a unit that only part of which is made of magnetic material. The rotary magnetic generator may have a shape with preferred mechanical moment and preferred response to mechanical excitations. The rotary magnetic generator may have any preferred shape including an oval shape. The rotary magnetic generator may be comprised of several magnets arranged in a way to enhance the change in the magnetic flux at the coil when the rotary magnet rotates. For example, such an enhancement may be created by arranging several magnets to form a magnetic lens.

The axial connection of the rotary magnetic generator to the body may be done by a variety of connecting means (53), such as a pin, axis, hinge, bearing, and the like.

The rotary magnetic generator may be connected to the frame by a hinge (similar to an axial connection) at the connecting point that enables the rotary magnetic generator to rotate about its axis of rotation. The connection of the rotary magnetic generator to the frame is in the connecting point that makes the axis of rotation in a distal and away from the center of gravity of the rotary magnetic generator.

The axial connection and the fixation of the stationary magnet in relation to the axis of rotation are designed to enable the magnetic force (F) between the magnets to rotate the rotary magnetic generator about the axial connection to the equilibrium rotation angle (18).

The axial connection is designed to enable the rotations, vibrations or movements of the wheel to rotate the rotary magnetic generator out from the equilibrium rotation angle and these cyclical rotations of the rotary magnetic generator are designed to create the alternating voltage between the two ends of the coil. In other words, the movements (the kinetic excitations) of the wheel cause the rotary magnetic generator to rotate about its axis of rotation in such a way that the center of gravity of the rotary magnetic generator moves in relation to the stationary magnet out from the equilibrium rotation angle, and when the harvester crosses the contact patch the centrifugal force becomes zero and the stationary magnet causes the rotary magnetic generator to rotate backwards to the equilibrium rotation angle. These rotations of the rotary magnetic generator that happened relative to the coil (when its center of gravity rotates cyclically in relation to the stationary magnet) create the alternating voltage between the ends of the coil.

In some cases, the inertia of the rotary magnetic generator, as it enters and exits the contact patch, maintain its orientation while the frame with the coil, that are fixed to the tire, change the direction when entering and exiting the contact patch. This causes a change in the angle between the rotary magnetic generator and the line perpendicular to the specific area (53), and therefore leading to a rotation of the rotary magnetic generator relative to the coil which generates a voltage between the two ends of the coil.

In more details, the axial connection is designed to enable the rotations of the wheel to rotate the rotary magnetic generator out from the equilibrium rotation angle when a force is applied on the magnet. During traveling, the harvester crosses the contact patch of the tire with ground. The contact patch is characterized in change from round tire to flat tire. This result in changes in the centrifugal forces applied on the rotary magnet as well as in a sudden change in the movement direction of the frame. Such change in centrifugal forces and sudden change in direction of the frame may cause cyclic rotations of the magnet relative to the coil that is fixed to the frame, which generates alternating voltage between the two ends of the coil.

The axial connection and the fixation of the stationary magnet in relation to the axis of rotation are designed to enable the magnetic force (F) between the magnets to rotate the rotary magnetic generator about the axial connection to the equilibrium rotation angle when the specific area crosses the contact patch of the tire with the ground during the traveling of the vehicle (when there is no centrifugal force on the harvester and on the magnets). The axial connection is designed to enable the rotations of the wheel to rotate the rotary magnetic generator out from the equilibrium rotation angle when the specific area (53) rolls outside the contact patch, due to the centrifugal force that acts on the rotary magnetic generator.

These cyclical rotations of the rotary magnetic generator are designed to create alternating voltage between the two ends of the coil.

In this invention it is stated that the movement of the wheel generates cyclic rotations of the rotary magnet relative to the equilibrium rotation angle and relative to the coil. It is understood that the rotary magnet may also complete a full rotation.

The present invention discloses also a method for converting (and not only rotations) of the wheel of the vehicle while travelling to electricity that has the steps and structure as stated above regarding the rotations:
The method for converting the vibrations of the wheel of the vehicle while traveling to electricity also includes the step (A) of providing the harvester (10). In this case, the axial connection and said fixation of the stationary magnet in relation to the axis of rotation are designed to enable the magnetic force between the magnets to rotate the rotary magnetic generator about the axial connection in a direction of the equilibrium rotation angle and the axial connection is designed to enable forces, derived from the vibrations of the wheel, to rotate the rotary magnetic generator outside the direction of that equilibrium rotation angle, and by rotating the rotary magnetic generator about the axial connection to the equilibrium rotation angle and rotating back the rotary magnetic generator out from the equilibrium rotation angle, by driving the vehicle, causing the cyclical rotations of the rotary magnetic generator that create the alternating voltage between the two ends of the coil.

In some cases more than one stationary magnet may yield better results, and it is preferably to fix them in different directions in relation to the rotary magnetic generator in the manner of the magnetic forces between them. For example, Figure 6 describes the harvester with additional stationary magnet (17B) that is positioned vertically to the stationary magnet (17). Such geometry showed higher voltage developing in the coil and faster conversion of mechanical energy to electrical energy compared to configuration with one stationary magnet. The use of several stationary magnets increases the voltage developed in the coil as well as improve the conversion of the mechanical power to electricity. These stationary magnets may be positioned around the rotary magnet in different locations and angles one relative to the other. The rotary magnetic generator in the harvester with a plurality of stationary magnets is more likely and easily to rotate by the mechanical power (vibrations, movements, rotations and the like) and by that such harvester harvest the electricity more efficiently. The harvester may therefore further includes the additional stationary magnet that is fixed to the body or the frame in a way that the direction of the magnetic force (F2) between the additional stationary magnet (17) and the rotary magnetic generator is different than the direction of the magnetic force (F) between the stationary magnet to the rotary magnetic generator.

## Claims

1. A method for converting rotations of a wheel (50) of a vehicle (51) while traveling to electricity, comprising:
(a) providing an electromagnetic energy harvester (10) that includes:
(i) a frame (11) that is designed to be fixed on a tire (52) that is mounted or designed to be mounted on the wheel (50) of the vehicle (51),
(ii) a coil (12) with two ends (121) (122) that is fixed to the frame (11),
(iii) a rotary magnetic generator (13) that is axially connected to the frame (11), at a connecting point (14) that is distal from a center of gravity (15) of the rotary magnetic generator (13), such that the rotary magnetic generator (13) is able to rotate about an axis of rotation (16) in relation to the frame (11), and
(iv) a stationary magnet (17) that is fixed to the frame (11), such that the stationary magnet (17) is fixed in relation to said axis of rotation (16);
wherein said axial connection and said fixation of the stationary magnet (17) in relation to said axis of rotation (16) are designed to enable a magnetic force (F) between said magnets (13) (17) to rotate the rotary magnetic generator (13) about said axial connection to an equilibrium rotation angle (18) when a specific area (53) with the electromagnetic energy harvester (10) crosses a contact patch (54) of the tire with ground (55) during said traveling; and wherein said axial connection is designed to enable said rotations of the wheel (50) to rotate the rotary magnetic generator (13) out from said equilibrium rotation angle (18) when the specific area (54) rolls outside said contact patch (54);
(b) rotating the rotary magnetic generator (13) about said axial connection to the equilibrium rotation angle (18) by driving the vehicle when the specific area (53) with the electromagnetic energy harvester (10) crosses the contact patch (54) of the tire with the ground (55);
(c) rotating the rotary magnetic generator (13) out from the equilibrium rotation angle (18) by driving the vehicle when the specific area (53) rolls outside said contact patch (54); and
wherein said cyclical rotations of the rotary magnetic generator (13) are designed to create alternating voltage between the two ends (121) (122) of the coil (12).

2. The method for converting rotations of a wheel (50) of a vehicle (51) while traveling to electricity of claim 1 wherein a distance (x) from said axis of rotation (16) to a farthest point (61) on an edge (62) of said rotary magnetic generator (13) is smaller than a distance (y) from said axis of rotation (16) to said stationary magnet (17).

3. The method for converting rotations of a wheel (50) of a vehicle (51) while traveling to electricity of claim 1 that further includes an additional stationary magnet (17B) that is fixed to said frame (11) in a way that a direction of a magnetic force (F2) between the additional stationary magnet (17B) and said rotary magnetic generator (13) is different than a direction of said magnetic force (F) between said stationary magnet (17) to the rotary magnetic generator (13).

4. A method for converting vibrations of a wheel (50) of a vehicle (51) while traveling to electricity, comprising:
(a) providing an electromagnetic energy harvester (10) that includes:
(i) a frame (11) that is designed to be fixed on a tire (52) that is mounted or designed to be mounted on the wheel (50) of the vehicle (51),
(ii) a coil (12) with two ends (121) (122) that is fixed to the frame (11),
(iii) a rotary magnetic generator (13) that is axially connected to the frame (11), at a connecting point (14) that is distal from a center of gravity (15) of the rotary magnetic generator (13), such that the rotary magnetic generator (13) is able to rotate about an axis of rotation (16) in relation to the frame (11), and
(iv) a stationary magnet (17) that is fixed to the frame (11), such that the stationary magnet (17) is fixed in relation to said axis of rotation (16);
wherein said axial connection and said fixation of the stationary magnet (17) in relation to said axis of rotation (16) are designed to enable a magnetic force (F) between said magnets (13) (17) to rotate the rotary magnetic generator (13) about said axial connection in a direction of equilibrium rotation angle (18); and wherein said axial connection is designed to enable forces, derived from said vibrations, to rotate the rotary magnetic generator (13) outside the direction of said equilibrium rotation angle (18);
(b) rotating the rotary magnetic generator (13) about said axial connection to the equilibrium rotation angle (18) and rotating the rotary magnetic generator (13) out from the equilibrium rotation angle (18), by driving the vehicle; and
wherein said cyclical rotations of the rotary magnetic generator (13) are designed to create alternating voltage between the two ends (121) (122) of the coil (12).

5. The method for converting vibrations of a wheel (50) of a vehicle (51) while traveling to electricity of claim 4 wherein a distance (x) from said axis of rotation (16) to a farthest point (61) on an edge (62) of said rotary magnetic generator (13) is smaller than a distance (y) from said axis of rotation (16) to said stationary magnet (17).

6. The method for converting vibrations of a wheel (50) of a vehicle (51) while traveling to electricity of claim 4 that further includes an additional stationary magnet (17B) that is fixed to said frame (11) in a way that a direction of a magnetic force (F2) between the additional stationary magnet (17B) and said rotary magnetic generator (13) is different than a direction of said magnetic force (F) between said stationary magnet (17) to the rotary magnetic generator (13).
